# EUROPEAN PATENT APPLICATION

(11) **EP 3 357 347 A1**
(43) Date of publication of application: **08.08.2018**
(21) Application number: 16850425.6
(22) Date of filing: 29.09.2016
(51) Int. Cl.: A23L 3/00

(54) **SYSTEM FOR THE TREATMENT OF FOODS BY MEANS OF HIGH PRESSURE AND TEMPERATURE**

(30) Priority: 02.10.2015 ES 201531416
(71) Applicant: Metronics Technologies S.L, 31110 Noain (Navarra) (ES)
(72) Inventor: DE ORTE GLARIA, Benito, 31110 Noain (Navarra) (ES)
(74) Representative: Evens, Paul Jonathan
(86) International application number: PCT/ES2016/070683
(87) International publication number: WO 2017/055665

(57) **Abstract**

The invention relates to a system for the treatment of food by means of high pressure and temperature, comprising a circuit (C) through which a fluid (F) circulates, going through a receptacle (1) provided with a treatment chamber (11) in which the food to be treated is introduced, the circuit (C) comprising pumping means which increase the pressure of the fluid (F) and maintain a constant circulation of fluid (F) in the circuit (C), and heat transfer means which increase the temperature of a first flow (F') of fluid (F) and reduce the temperature of a second flow (F") of fluid (F); and the receptacle (1) comprising a peripheral chamber which receives the second flow (F") of fluid (F), and closure caps comprising a first conduit configured for allowing the passage of the first flow (F') of fluid (F) to the treatment chamber and a second conduit configured for allowing the passage of the second flow (F") of fluid (F) to the peripheral chamber.

## Description

### Field of the Art

The present invention relates to the food industry, proposing a system for the preservation of food by means of the high pressure and temperature (HPT) treatment technology, such that the quality of the food is improved, prolonging its shelf life and making it safer and more sustainable and nutritious.

### State of the Art

In the last decade, treatment technologies for food preservation by means of applying pressure have experienced a high rate of penetration in the food and intermediate component market at the expense of other techniques such as thermal and chemical treatments.

In this respect, high-pressure treatment (HPP-High Pressure Processing) technology, which is a natural food processing technique that allows preserving the ingredients and characteristics of the fresh product, is known. In HPP technology, the food to be treated is arranged in a sealed flexible container and introduced into a hermetic receptacle in which pressurized water is injected until the receptacle reaches the suitable working pressure (3000 to 7000 bars), at which time water will no longer be injected, the pressure being kept constant during the entire food treatment cycle.

HPP technology is carried out at a temperature close to room temperature (5 to 30°C); however, evolution of HPP technology has given rise to HPT (High Pressure and Temperature) technology whereby food is treated at a high pressure (3000 to 7000 bars) along with the application of a high temperature, which may reach up to 120°C, for the purpose of eliminating pathogens from the food that cannot be eliminated with HPP technology.

In HPT technology, packaged food is also introduced into a receptacle into which pressurized water is injected until reaching the suitable working pressure (3000 to 7000 bars), but unlike HPP technology, hot water is injected into the receptacle, and it is kept hot during the entire treatment cycle by means of an external heating system which increases the temperature of the entire receptacle.

Although HPT technology allows eliminating harmful pathogens, the high temperatures at which the food is processed affect the receptacle in which the food are treated, such that the shelf life of the receptacle decreases, while at the same time causing a more expensive receptacle design.

There is therefore a need for a system for the treatment of food by means of high pressure and temperature which reduces, as much as possible, the impact to which the receptacle is subjected due to the high temperatures reached by the treatment water.

### Object of the Invention

The invention proposes a system for the treatment of food using a receptacle through which a first flow of fluid is circulated at a high pressure and high temperature for the treatment of food arranged inside the receptacle, and a second continuous flow of fluid is circulated at a temperature lower than the treatment temperature, used for cooling the receptacle and safeguarding its integrity.

The system for the treatment of food by means of high pressure and temperature comprises a circulation circuit through which a fluid circulates, going through a receptacle provided with a treatment chamber in which the food to be treated is introduced.

The circulation circuit comprises pumping means configured for increasing the pressure of the fluid and for maintaining a constant circulation of fluid in the circulation circuit, and heat transfer means configured for increasing the temperature of a first flow of fluid and for reducing the temperature of a second flow of fluid.

The food treatment receptacle comprises a peripheral chamber configured for receiving the second flow of fluid, and closure caps for closing the ends of the receptacle, wherein each cap comprises a first conduit configured for establishing a passage for the first flow of fluid to the treatment chamber and a second conduit configured for establishing a passage for the second flow of fluid to the peripheral chamber.

The pumping means are a first pressure intensifier pump configured for increasing the pressure of the fluid to the working pressure of the receptacle, and a second pressure intensifier pump configured for maintaining a continuous circulation of the fluid in the circulation circuit.

The heat transfer means are a first heat exchanger configured for increasing the temperature of a first flow of fluid and a second heat exchanger configured for reducing the temperature of a second flow of fluid.

The circulation circuit additionally comprises a point of divergence, located upstream of the receptacle, at which the fluid splits into the first flow and the second flow of fluid, and a point of convergence, located downstream of the receptacle, at which the first flow and the second flow of fluid are mixed into a mixed fluid which is recirculated to the point of divergence.

A third heat exchanger configured for reducing the temperature of the mixed fluid which is recirculated to the point of divergence has been envisaged to be arranged downstream of the point of convergence.

The peripheral chamber through which the second flow of fluid circulates is defined between the inner wall of the body of the receptacle and a cylindrical steel sleeve surrounding the treatment chamber. The cylindrical steel sleeve comprises at its ends annular edges with channels being made therein for the passage of the second flow of fluid to the peripheral chamber. Each cap used for closing the receptacle comprises a first annular sealing ring arranged on the outer perimeter of the cap which is configured for establishing a leak-tight closure against the inner wall of the body of the receptacle, and a second annular sealing ring arranged on the sides of the lower base of the cap which is configured for establishing a leak-tight closure against the annular edge of the cylindrical steel sleeve. With this configuration, a leak-tight closure of the channels for the passage of the second flow of fluid to the peripheral chamber is established between the first and second annular sealing rings.

It has also been envisaged that the first conduit is located approximately in the center of the cap, and the second conduit is located at one end of the cap in a radial outer position with respect to the first conduit, such that the circulation of the second flow of fluid through the second conduit of the cap reduces the heat transferred by the first flow of fluid circulating through the first conduit of the cap, the annular sealing rings of the cap therefore being thermally protected.

The first conduit comprises a high-pressure tube through which the first flow of fluid safely circulates to the treatment chamber. High-pressure sealing rings configured for establishing a leak-tight closure between the first conduit and the high-pressure tube have been envisaged to be arranged in the inner part of the first conduit.

It has been envisaged that the peripheral chamber comprises a helical ring which is particularly configured for directing the second flow of fluid along the peripheral chamber according to a helical path, such that the second flow of fluid contacts the entire surface of the cylindrical steel sleeve, establishing a thermal barrier with respect to the treatment chamber in which the first flow of fluid circulates at a high temperature.

The treatment chamber is lined with a layer of polymeric material and the lower part of each cap is lined with another layer of polymeric material, such that when a pot is introduced into the treatment chamber and the caps are inserted, the layers of polymeric material of the caps and of the treatment chamber surround the entire contour of the pot.

A system intended for the treatment of food with a combination of pressure and temperature is thus obtained, in which the structural integrity of the food treatment receptacle is safeguarded as the receptacle works at a temperature that is lower than the temperature to which the food to be treated inside the treatment chamber of the receptacle are subjected.

### Description of the Drawings

Figure 1 shows a schematic view of the system for the treatment of food with the treatment receptacle and a closed circulation circuit for the circulation of fluid.
Figure 2 shows a section view of the food treatment receptacle in which the passage for the circulation of the first and second flows of fluid through the receptacle is seen.
Figure 3 shows a section view of the receptacle like the one of the preceding figure with the closure caps of the receptacle in an extracted position.
Figure 4 shows an enlarged detail of a cap of the receptacle in which the passage for the circulation of the first and second flows of fluid through the cap is seen.

### Detailed Description of the Invention

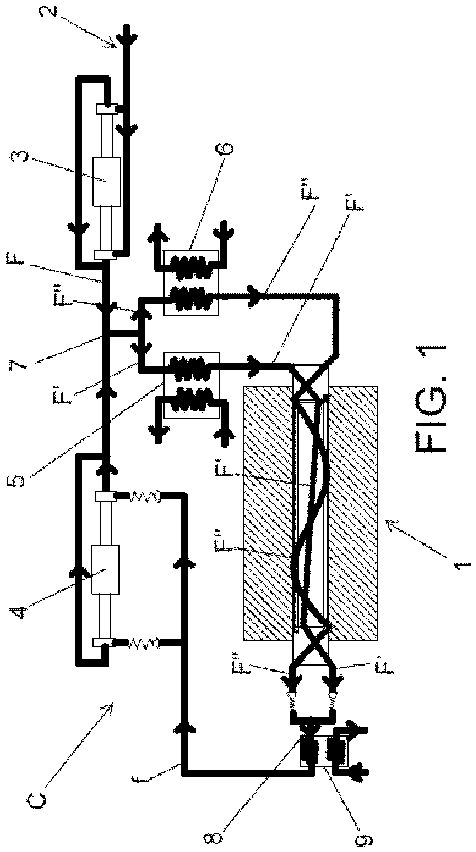

Figure 1 shows a schematic view of the system for the treatment of food of the invention, which comprises a receptacle (1) for the treatment of food arranged downstream of an inlet (2) of a closed circulation circuit (C) for the circulation of fluid (F), the fluid that is used generally being water, nevertheless it may be any other type of fluid suitable for the treatment of food.

The circulation circuit (C) comprises the inlet (2) for the entry of the fluid (F), a first pressure intensifier pump (3) configured for increasing the pressure of the fluid (F) to the working pressure of the receptacle (1), a second pressure intensifier pump (4) configured for maintaining a continuous circulation of the fluid (F) in the circulation circuit (C), both pressure intensifiers (3, 4) being arranged upstream of the receptacle (1), a first heat exchanger (5) configured for increasing the temperature of the fluid (F), and a second heat exchanger (6) configured for reducing the temperature of the fluid (F), both heat exchangers (5, 6) being arranged downstream of the pressure intensifiers (3, 4) of the circulation circuit (C) for the circulation of the fluid (F).

The circulation circuit (C) additionally comprises a point of divergence (7) located upstream of the receptacle (1) at which the fluid (F) injected through the inlet (2) splits into a first flow (F') and a second flow (F"), and a point of convergence (8) located downstream of the receptacle (1) at which the first flow (F') and the second flow (F'') are mixed forming a mixed fluid (f) which is recirculated to the point of divergence (7). The first flow (F') of fluid (F) is conducted to the first heat exchanger (5) in which the temperature thereof increases to the working temperature of the receptacle (1), i.e., to a temperature of about 120°C, and the second flow (F") of fluid (F) is conducted to the second heat exchanger (6) in which the temperature thereof decreases to a value less than 38°C.

A third heat exchanger (9) configured for reducing the temperature of the mixed fluid (f) which is recirculated to the point of divergence (7) has been envisaged to be arranged downstream of the point of convergence (8).

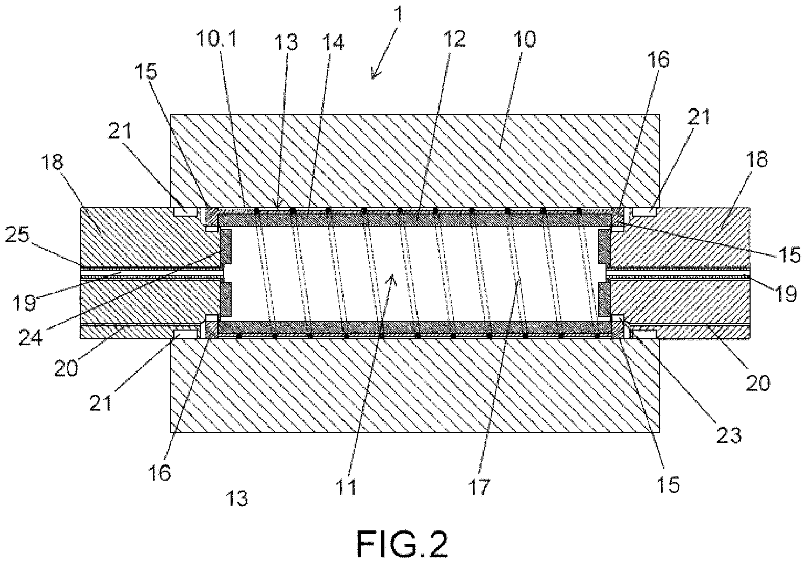

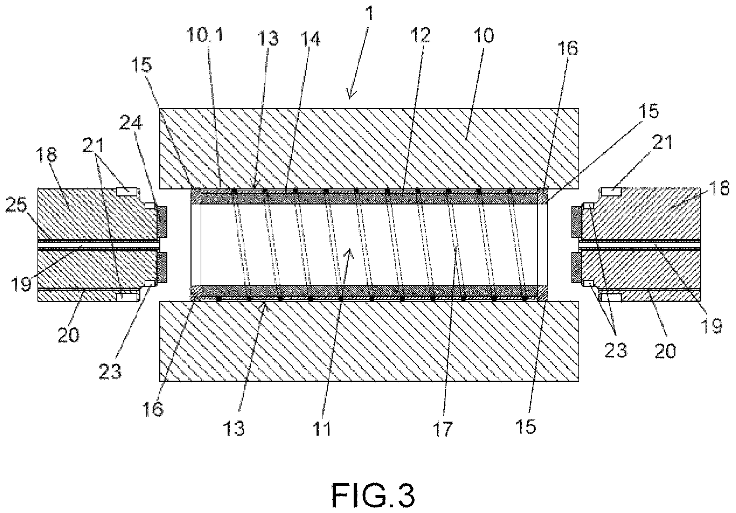

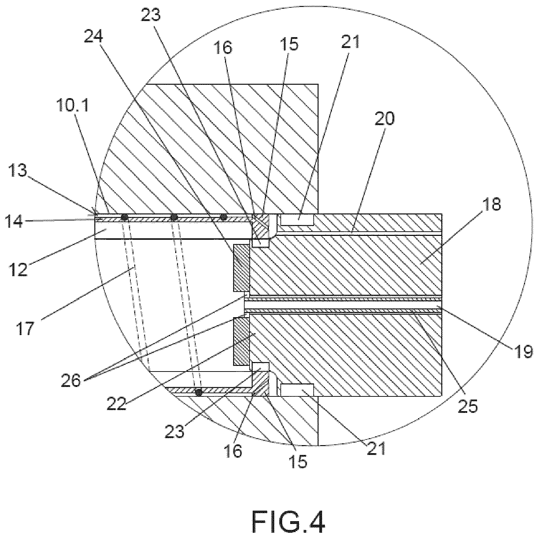

As seen in Figures 2 to 4, the food treatment receptacle (1) comprises a body (10) which has a cylindrical configuration and incorporates therein a treatment chamber (11) into which the first flow (F') of fluid (F) is injected for treating the food by means of applying a high pressure between 3000 and 7000 bars and a high temperature which may reach up to 120°C.

The treatment chamber (11) is intended for receiving therein a steel pot (not depicted in the drawings) incorporating the food to be treated. To facilitate the entry and exit of the steel pot, it has been envisaged that the treatment chamber (11) is lined with a layer (12) of polymeric material.

The pot that is introduced into the treatment chamber (11) can be made of (perforated) steel or of a plastic material. Nevertheless, it is possible to introduce the food directly into the treatment chamber (11), in which case the layer (12) of polymeric material favors the sliding of the food, facilitating the introduction and extraction thereof with respect to the treatment chamber (11).

The receptacle (1) comprises a peripheral chamber (13) between the body (10) and the treatment chamber (11) which is intended for receiving the second flow (F'') of fluid (F) so as to prevent the high temperature of the first flow (F') of fluid (F) circulating through the treatment chamber (11) from being able to be transmitted to the body (10) of the receptacle (1), affecting its integrity. The peripheral chamber (13) is defined between the inner wall (10.1) of the body (10) and a cylindrical steel sleeve (14) incorporating in its inner part the layer (12) of polymeric material lining the treatment chamber (11).

The cylindrical steel sleeve (14) has at its ends annular edges (15) with channels (16) being made therein for the passage of the second flow (F") of fluid (F) through the peripheral chamber (13).

Additionally it has been envisaged that the peripheral chamber (13) incorporates a helical ring (17) which causes the second flow (F") of fluid (F) to describe an orderly circulation in the form of a helical movement along the peripheral chamber (13). This circulation assures a uniform distribution of the second flow (F") of fluid (F) which acts as a thermal separation barrier so that the temperature of the treatment chamber (11) does not affect the integrity of the receptacle (1).

The receptacle (1) incorporates at both ends caps (18) having a cylindrical configuration intended for being inserted into the treatment chamber (11) in which the food to be treated is housed. Each cap (18) comprises a first conduit (19) configured for allowing the passage of the first flow (F') of fluid (F) to the treatment chamber (11) and a second conduit (20) configured for allowing the passage of the second flow (F") of fluid (F) to the peripheral chamber (13).

Each cap (18) incorporates on its outer perimeter a first annular sealing ring (21) intended for establishing a leak-tight closure against the inner wall (10.1) of the body (10). Likewise, each cap (18) has a lower base (22) having a diameter smaller than the diameter of the outer perimeter of the cap (18), a second annular sealing ring (23) intended for establishing a leak-tight closure against the annular edge (15) of the cylindrical steel sleeve (14) being incorporated on the sides of said lower base (22). A closure which hermetically seals the passage of the second flow (F") of fluid (F) between the second conduit (20) of the cap (18) and the channel (16) of the cylindrical steel sleeve (14) is established by means of the first and second annular sealing rings (21, 23).

Each cap (18) is lined in its lower part by means of another layer (24) of polymeric material, such that when a pot introduced into the treatment chamber (11) is used and the caps (18) are inserted, the layers (24, 12) of polymeric material of the caps (18) and the treatment chamber (11) surround the entire contour of the pot.

The first conduit (19) incorporates therein a high-pressure tube (25) through which the first flow (F') of fluid (F) circulates at a high temperature, and high-pressure sealing rings (26) assuring a leak-tight closure between the first conduit (19) and the high-pressure tube (25) are arranged in the inner part of the first conduit (19) communicating with the treatment chamber (11).

In the embodiment shown in the drawings, it can be seen that the first conduit (19) is arranged approximately in the center of the cap (18), whereas the second conduit (19) is arranged at one end of the cap (18) in a radial outer position with respect to the first conduit (19), such that the heat given off by the first flow (F') of high-temperature fluid (F) is concentrated in the central part of the cap (18), and when the second flow (F') of fluid (F) with a lower temperature circulates along the outside of the cap (18), the heat transfer decreases, the annular sealing rings (21, 23) of the cap (18) thus being thermally protected.

Therefore, the fluid (F) is injected into the circulation circuit (C) through the inlet (2) where it is directed to the first pressure intensifier pump (3) which is in charge of increasing the pressure of the fluid (F) in the circulation circuit (C) to the working pressure (3000 to 7000 bars). The fluid (F) is directed to the point of divergence (7) at which it splits into a first flow (F') of fluid (F) and a second flow (F") of fluid (F), the first flow (F') of fluid (F) being caused to go through the first heat exchanger (5) in which the temperature thereof is increased to the working temperature that may reach the order of 120°C, and the second flow (F") of fluid (F) being caused to go through the second heat exchanger (6) in which the temperature thereof is reduced to a value less than 38°C.

In this sense, the first flow (F') of high-temperature fluid (F) is introduced into the treatment chamber (11) of the receptacle (1) through the first conduit (19) of the cap (18), and the second flow (F") of fluid (F) with a lower temperature is introduced into the peripheral chamber (13) through the second conduit (20) of the cap (18). The two flows (F', F") are mixed at the point of convergence (8) at the outlet of the cap (18) and made to go through the third heat exchanger (9) in which the temperature thereof is reduced, the mixed fluid (f) being directed to the second pressure intensifier pump (4) which recirculates the mixed fluid (f) to the point of divergence (7) at which it is mixed with the fluid (F) and is in charge of maintaining a constant circulation of fluid (F) in the circulation circuit (C).

By mixing the two flows (F', F") of fluid (F) at the outlet of the receptacle (1), the lower temperature of the second flow (F") of fluid (F) helps to reduce the temperature of the first flow (F') of fluid (F), such that the mixed fluid (f) at the inlet of the second pressure intensifier pump (4) is at a suitable temperature which facilitates its compression, while at the same time it does not affect its internal operation. Additionally, the third heat exchanger (9) helps to further reduce the temperature of the mixed fluid (f) at the outlet of the point of convergence (8).

This configuration of the heat exchangers (5, 6, 9), the point of divergence (7), and the point of convergence (8) of the flows of fluid allows the fluid (F) to circulate through each of the components of the system for the treatment of food at a suitable temperature which does not affect the internal operation of the components. The circulation of the first flow (F') of high-temperature fluid (F) is therefore limited to the segment comprised between the outlet of the first heat exchanger (5) and the outlet of the treatment chamber (11) of the receptacle (1), such that the rest of the components of the system that must work at high pressures are protected from impacts that may be caused by high temperatures.

## Claims

1. A system for the treatment of food by means of high pressure and temperature, comprising a circulation circuit (C) through which a fluid (F) circulates, going through a receptacle (1) provided with a treatment chamber (11) in which the food to be treated is introduced, **characterized in that** the circulation circuit (C) comprises:
- pumping means configured for increasing the pressure of the fluid (F) and maintaining a constant circulation of fluid (F) in the circulation circuit (C), and
- heat transfer means configured for increasing the temperature of a first flow (F') of fluid (F) and for reducing the temperature of a second flow (F") of fluid (F) ;
and **in that** the receptacle (1) comprises:
- a peripheral chamber (13) configured for receiving the second flow (F") of fluid (F),
- and closure caps (18) for closing the ends of the receptacle (1), wherein each cap (18) comprises a first conduit (19) configured for establishing a passage for the first flow (F') of fluid (F) to the treatment chamber (11) and a second conduit (20) configured for establishing a passage for the second flow (F") of fluid (F) to the peripheral chamber (13).

2. The system for the treatment of food by means of high pressure and temperature according to claim 1, **characterized in that** the pumping means are a first pressure intensifier pump (3) configured for increasing the pressure of the fluid (F) to the working pressure of the receptacle (1), and a second pressure intensifier pump (4) configured for maintaining a continuous circulation of the fluid (F) in the circulation circuit (C).

3. The system for the treatment of food by means of high pressure and temperature according to any one of the preceding claims, **characterized in that** the heat transfer means are a first heat exchanger (5) configured for increasing the temperature of the first flow (F') of fluid (F) and a second heat exchanger (6) configured for reducing the temperature of the second flow (F") of fluid (F).

4. The system for the treatment of food by means of high pressure and temperature according to any one of the preceding claims, **characterized in that** the circulation circuit (C) additionally comprises a point of divergence (7) located upstream of the receptacle (1) at which the fluid (F) splits into the first flow (F') and the second flow (F") of fluid (F), and a point of convergence (8) located downstream of the receptacle (1) at which the first flow (F') and the second flow (F") of fluid (F) are mixed into a mixed fluid (f) which is recirculated to the point of divergence (7).

5. The system for the treatment of food by means of high pressure and temperature according to the preceding claim, **characterized in that** a third heat exchanger (9) configured for reducing the temperature of the mixed fluid (f) is arranged downstream of the point of convergence (8).

6. The system for the treatment of food by means of high pressure and temperature according to any one of the preceding claims, **characterized in that** the peripheral chamber (13) is defined between the inner wall (10.1) of the body (10) of the receptacle (1) and a cylindrical steel sleeve (14) surrounding the treatment chamber (11).

7. The system for the treatment of food by means of high pressure and temperature according to the preceding claim, **characterized in that** the cylindrical steel sleeve (14) comprises at its ends annular edges (15) with channels (16) being made therein for the passage of the second flow (F") of fluid (F) to the peripheral chamber (13).

8. The system for the treatment of food by means of high pressure and temperature according to the preceding claim, **characterized in that** each cap (18) comprises a first annular sealing ring (21) arranged on the outer perimeter of the cap (18) which is configured for establishing a leak-tight closure against the inner wall (10.1) of the body (10) of the receptacle (1), and a second annular sealing ring (23) arranged on the sides of the lower base (22) of the cap (18) which is configured for establishing a leak-tight closure against the annular edge (15) of the cylindrical steel sleeve (14) .

9. The system for the treatment of food by means of high pressure and temperature according to any one of the preceding claims, **characterized in that** the first conduit (19) is located in the center of the cap (18), and the second conduit (20) is located at one end of the cap (18) in a radial outer position with respect to the first conduit (19).

10. The system for the treatment of food by means of high pressure and temperature according to any one of the preceding claims, **characterized in that** the first conduit (19) comprises a high-pressure tube (25) through which the first flow (F') of fluid (F) circulates to the treatment chamber (11) .

11. The system for the treatment of food by means of high pressure and temperature according to the preceding claim, **characterized in that** high-pressure sealing rings (26) configured for establishing a leak-tight closure between the first conduit (19) and the high-pressure tube (25) are arranged.

12. The system for the treatment of food by means of high pressure and temperature according to any one of the preceding claims, **characterized in that** the peripheral chamber (13) comprises a helical ring (16) configured for directing the second flow (F") of fluid (F) along the peripheral chamber (13).

13. The system for the treatment of food by means of high pressure and temperature according to any one of the preceding claims, **characterized in that** the treatment chamber (11) is lined with a layer (12) of polymeric material and the lower part of each cap (18) is lined with another layer (24) of polymeric material.
